# EUROPÄISCHE PATENTSCHRIFT

(11) **EP 2 241 482 B1**
(45) Veröffentlichungstag und Bekanntmachung des Hinweises auf die Patenterteilung: **24.04.2013**
(21) Anmeldenummer: 09178049.4
(22) Anmeldetag: 04.12.2009
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 20.10.2010
(73) Patentinhaber: ISE Automotive GmbH, 51702 Bergneustadt (DE)
(72) Erfinder: Latussek, Holger, 51702, Bergneustadt (DE)
(74) Vertreter: Kalkoff & Partner

(56) Entgegenhaltungen:
- EP-A1- 0 729 867
- DE-C1- 10 027 753
- DE-C1- 10 229 635

## Beschreibung

### Beschreibung

### Überrollschutzsystem für Kraftfahrzeuge

Die Erfindung betrifft ein Überrollschutzsystem für Kraftfahrzeuge, mit
- einem zwischen einer Lagerungsposition und einer Überschlagsposition verstellbaren Überrollkörper,
- einer den Überrollkörper in Richtung auf die Überschlagsposition vorspannenden Antriebseinheit und
- einer zwischen einer den Überrollkörper arretierenden Sperrstellung und einer den Überrollkörper freigebenden Freigabestellung verstellbaren Verriegelungseinheit.

Überrollschutzsysteme der eingangs genannten Art sind in vielfältigen Ausgestaltungen bekannt. Sie dienen bei Cabriolets aller Art zum Schutz der Insassen bei einem Überschlag, wobei die in der Überschlagsposition aufgestellten Überrollkörper den Insassen einen Überlebensraum bereitstellen, wenn das Fahrzeug auf den Überrollkörpern abrollt.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, werden vermehrt die sogenannten aktiven Überrollschutzsysteme eingesetzt, bei denen die Überrollkörper im Normalzustand in einer Lagerungsposition befindlich sind und nur im Gefahrenfall, nämlich bei einem drohenden Überschlag in eine Überschlagsposition verstellt werden, in der sie in Verbindung mit der Karosserie einen Überlebensraum bereitstellen.

Überrollkörper, bspw. Überrollbügel, die hinter den Fahrzeugsitzen angeordnet sind und sich im Falle eines Überschlags selbsttätig aufstellen, stellen eine bevorzugte Ausführungsform eines aktiven Überrollschutzsystems dar. Der Überrollkörper ist dabei in der Lagerungsposition zum Beispiel durch eine Antriebseinheit in Richtung auf die Überschlagsposition vorgespannt und wird in dieser Position durch die Verriegelungseinheit gehalten. Im Überschlagsfall gibt die Verriegelungseinheit sensorgesteuert den Überrollkörper frei, so dass dieser, angetrieben durch die Antriebseinheit, in die Überschlagsposition gelangt. Die Freigabe des Überrollkörpers durch die Verriegelungseinheit erfolgt in der Regel durch einen Aktuator, welcher eine Verstellung der Verriegelungseinheit bewirkt. Aufgrund der geforderten schnellen Reaktionszeiten werden dabei insbesondere pyrotechnische Aktuatoren verwendet, die im Bedarfsfall eine blitzartige Aufstellung der Überrollkörper gewährleisten können.

Die Funktionsweise der Aktuatoren kann dabei von System zu System abweichen. Neben Aktuatoren, bei denen zur Auslösung ein Stift aus einem Aktuatorgehäuse herausschnellt, um eine Verstellung der Verriegelungseinheit zu bewirken, werden ziehende Aktuatoren eingesetzt, bei denen der Aktuator, bspw. der Stift in der Sperrstellung dauerhaft mit der Verriegelungseinheit in Eingriff befindlich ist und diese in dieser Stellung arretiert. Zur Auslösung des Überrollschutzsystems wird bei der Aktivierung des Aktuators dieser mit der Verriegelungseinheit außer Eingriff gebracht. Der Stift wird bspw. in ein Aktuatorgehäuse verlagert.

Bei ziehend wirkenden, pyrotechnischen Aktuatoren, die zum Halten des Überrollkörpers dienen und die Verriegelungseinheit in der Sperrstellung festlegen, besteht der Nachteil, dass eine Testauslösung immer auch einen Austausch der Aktuatoren zur Folge hat, was hohe Kosten zur Folge hat.

Solche Überrollschutzsysteme sind durch DE 10027753, DE10229635 und EP 0729867 bekannt geworden.

Der Erfindung liegt die Aufgabe zugrunde, ein Überrollschutzsystem bereitzustellen, welches unabhängig von der Stellung des Aktuators eine testweise Auslösung des Überrollkörpers ermöglicht.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass an der Verriegelungseinheit eine in der Sperrstellung mit einem verstellbaren Aktuator in Eingriff befindliche und hierdurch die Verriegelungseinheit in der Sperrstellung festlegende Steuerungseinheit angeordnet ist, wobei die Steuerungseinheit darüber hinaus derart ausgebildet ist, dass diese in eine Entsperrposition verstellbar ist, in der die Verriegelungseinheit unabhängig von der Stellung des Aktuators in die Freigabestellung bewegbar ist.

Die Verriegelungseinheit des erfindungsgemäßen Überrollschutzsystems gewährleistet, dass der Überrollkörper im regulären Fahrzeugbetrieb in der Sperrstellung arretiert ist. Hierzu weist die Verriegelungseinheit eine Steuerungseinheit auf, die derart mit einem Aktuator zusammenwirkt, dass eine Verstellung der Verriegelungseinheit in eine Freigabestellung durch den Aktuator blockiert ist. Im Falle eines drohenden Überschlags erfolgt sensorgesteuert eine Aktivierung des Aktuators, wodurch die Verriegelungseinheit über die dann in die Entsperrposition verstellbare Steuerungseinheit freigegeben wird und eine Verstellung des Überrollkörpers in die Überschlagsposition erfolgt.

Eine Aufstellung, d. h. Verstellung der Überrollkörper in die Überschlagsposition erfolgt im Bedarfsfall durch Auslösung des vorzugsweise pyrotechnisch wirkenden Aktuators. Eine weitere Möglichkeit des erfindungsgemäßen Überrollschutzsystems, den Überrollkörper in die Überschlagsposition zu verstellen, wird durch die erfindungsgemäße Ausgestaltung ermöglicht, wonach die Steuerungseinheit unabhängig von der Position des Aktuators in eine Entsperrposition verstellbar ist, in der eine Verstellung der Verriegelungseinheit in die Freigabestellung möglich ist. Das erfindungsgemäße Überrollschutzsystem erlaubt es somit, den Überrollkörper zu Testzwecken auszulösen, ohne eine Aktivierung des nicht reversiblen pyrotechnischen Aktuators vorzunehmen. Nach erfolgter Testauslösung kann der Überrollkörper entgegen der durch die vorspannende Antriebseinheit auf den Überrollkörper in Richtung der Überschlagsposition wirkenden Kraft in die Lagerungsposition zurückbewegt werden, in der dieser durch die Verriegelungseinheit in Verbindung mit der Steuerungseinheit erneut festgelegt werden kann. Das erfindungsgemäße Überrollschutzsystem weist aufgrund der aktuatorunabhängigen Auslösemöglichkeit eine kostengünstige Überprüfung der Funktionssicherheit des Systems. Darüber hinaus kann das Überrollschutzsystem gemäß der Erfindung auch zu Demonstrationszwecken in wiederholtem Umfange ausgelöst werden, ohne dass hierfür anderenfalls ein umständlicher Austausch der Aktuatoren erforderlich wäre.

Die Ausgestaltung der zwischen der Sperrstellung und der Freigabestellung verstellbaren Verriegelungseinheit ist grundsätzlich frei wählbar. Nach der Erfindung weist diese jedoch eine zwischen der Sperrstellung und der Freigabestellung verschwenkbare Sperrklinke auf, die in der Sperrstellung einerseits mit dem Überrollkörper und andererseits mit einem Sperrstift des Aktuators in Wirkverbindung befindlich ist. Das Zusammenwirken des Sperrstifts des Aktuators mit der Sperrklinke hindert diese daran, infolge der durch die Antriebseinheit über den Überrollkörper auf die Sperrklinke wirkenden Kraft derart gegenüber dem Überrollkörper zu Verschwenken, dass die Sperrklinke mit diesem außer Eingriff gelangt. Im Falle der Ausgestaltung der Verriegelungseinheit als verschwenkbare Sperrklinke ist die Steuerungseinheit dabei derart an der Sperrklinke angeordnet, dass diese mit dem Sperrstift des Aktuators in der Sperrstellung in Eingriff befindlich ist. Eine aktuatorunabhängige Verstellung der Sperrklinke ist dadurch möglich, dass die Steuerungseinheit in einer Entsperrposition verstellbar ist, in der eine Sperrung der Sperrklinke durch den Aktuator bzw. dessen Sperrstift nicht mehr vorliegt. Die Verwendung einer vorgesehenen Sperrklinke zeichnet sich dabei durch ihren einfachen Aufbau sowie eine hohe Funktionssicherheit aus.

Grundsätzlich ist es für die Funktionssicherheit von Überschlagssystemen zwingend erforderlich, dass die Überrollkörper in ihren Überschlagspositionen derart arretiert sind, dass auch bei den im Überschlagsfall auftretenden, auf die Überrollkörper wirkenden Belastungen diese in den aufgestellten Überschlagspositionen verweilen. Eine Arretierung der Überrollkörper in den Überschlagspositionen kann dabei grundsätzlich in beliebiger Weise, zum Beispiel durch separate Verriegelungskörper oder -einheiten erfolgen. Nach einer besonders vorteilhaften Ausgestaltung der Erfindung ist die Sperrklinke jedoch in Richtung auf den Überrollkörper vorgespannt und zur Arretierung des Überrollkörpers in einer Überschlagsposition ausgebildet. Diese Ausgestaltung der Erfindung ermöglicht es, auf zusätzliche Baueinheiten zur Arretierung des Überrollkörpers in der Überschlagsposition zu verzichten. Die Vorspannung der Sperrklinke in Richtung auf den Überrollkörper gewährleistet dabei, dass diese zuverlässig mit dem Überrollkörper in der Überschlagsposition in Eingriff befindlich ist. Gemäß einer möglichen Ausgestaltung dieser Weiterbildung kann bspw. an dem Überrollkörper im Kontaktbereich der Sperrklinke eine oder mehrere Rastmarken angeordnet sein, die im Zusammenwirken mit der im entsprechenden Bereich komplementär ausgebildeten Sperrklinke eine Verstellung des Überrollkörpers in Richtung auf die Lagerungsposition blockiert.

Die Ausgestaltung der Steuerungseinheit an der Verriegelungseinheit kann grundsätzlich in beliebiger Weise erfolgen, wobei diese dabei insbesondere an die Ausgestaltung der Verriegelungseinheit abgestimmt sein kann. Nach einer besonders vorteilhaften Ausgestaltung der Erfindung ist vorgesehen, dass die Steuerungseinheit einen in die Entsperrposition längs verschiebbar an der Sperrklinke gelagerten und mit dem Sperrstift des Aktuators in der Sperrstellung in Eingriff befindlichen Steuerungsschieber aufweist.

Gemäß dieser Ausgestaltung der Erfindung liegt in der Sperrstellung der Sperrklinke der Steuerungsschieber an dem Sperrstift des Aktuators an, bzw. befindet sich in Eingriff mit diesem, wodurch eine Verstellung der Sperrklinke in eine Freigabestellung verhindert wird. Zur aktuatorunabhängigen Verstellung der Sperrklinke, d. h. um diese unabhängig von der Position des Aktuators oder dessen Sperrstift in die Freigabestellung bewegen zu können, ist der Steuerungsschieber längsverschiebbar an der Sperrklinke gelagert, wobei die Längsverschiebbarkeit derart ausgebildet ist, dass der Steuerungsschieber bis in eine Position verschoben werden kann, in der dieser mit dem Aktuator, bzw. einem Sperrstift des Aktuators außer Eingriff kommt, so dass die Sperrklinke unbeeinflusst durch den Aktuator in die Freigabestellung verschwenkt werden kann, wodurch der Überrollkörper freigegeben wird.

Diese Ausgestaltung der Erfindung zeichnet sich dadurch aus, dass sie besonders einfach und kostengünstig realisierbar ist. Die Verschiebbarkeit des Steuerungsschiebers an der Sperrklinke lässt sich in besonders einfacher Weise herstellen, wobei besonders vorteilhafterweise der Steuerungsschieber innerhalb der Sperrklinke in einer entsprechenden Aufnahme geführt werden kann. Über die Länge des Steuerungsschiebers lässt sich überdies in besonders einfacher Weise eine zuverlässige Arretierung der Verriegelungseinheit in der Sperrstellung für alle im Normalfall auftretenden Kräfte realisieren, so dass in besonderem Maße gewährleistet wird, dass sich der Überrollkörper nur im Bedarfsfall in die Überschlagsposition verstellt und es nicht zu Fehlauslösungen kommt.

Nach einer besonders vorteilhaften Weiterbildung der Erfindung ist der Steuerungsschieber dabei in Richtung auf die mit dem Aktuator in Eingriff befindliche Position vorgespannt. Somit wird besonders zuverlässig gewährleistet, dass der Steuerungsschieber im Regelfall in dieser Position verbleibt. Zusätzlich wird dadurch erreicht, dass nach einer Testauslösung durch Verschiebung des Steuerungsschiebers dieser nach Rückstellung des Überrollkörpers und der Verriegelungs- und Steuerungseinheit in einer Position befindlich ist, in der eine Arretierung über den Aktuator vorliegt. Die Vorspannung des Steuerungsschiebers kann dabei durch beliebige Vorspannelemente, bspw. Schraubendruckfedern oder dergleichen erreicht werden.

Kennzeichnend für das erfindungsgemäße Überrollschutzsystem ist eine aktuatorunabhängige Aktivierungs-/Auslösemöglichkeit des Überrollkörpers, wobei die Verriegelungseinheit unbeeinflusst durch den Aktuator in eine Freigabestellung bewegt werden kann. Wie bereits an obiger Stelle dargelegt, ist nach einer vorteilhafterweise vorgesehenen Weiterbildung darüber hinaus vorgesehen, dass die Verriegelungseinheit, bspw. die Sperrklinke zusätzlich zur Sicherung des Überrollkörpers in einer Überschlagsposition dient, wobei hierzu vorteilhafterweise eine Vorspannung der Sperrklinke in Richtung auf den Überrollkörper vorgesehen ist.

Im Falle einer Testauslösung ist es jedoch grundsätzlich nicht zwingend erforderlich, eine Arretierung des Überrollkörpers vorzusehen. Diese kann als hinderlich angesehen werden, da der Überrollkörper nach der zu Testzwecken erfolgten Aktivierung in seine Lagerungsposition zurückbewegt werden muss und im Falle einer Verriegelung durch die Verriegelungseinheit eine vorherige Entsperrung erforderlich wäre. Im Falle der Verwendung eines Steuerungsschiebers als Steuerungseinheit kann dieser nach einer besonders vorteilhaften Ausgestaltung der Erfindung derart ausgebildet sein, dass er die Sperrklinke in der Freigabestellung an dem Aktuator bzw. dessen Sperrstift arretiert. Diese Ausgestaltung gewährleistet, dass die Sperrklinke im Gegensatz zu einer durch den Aktuator erzeugten Auslösung daran gehindert ist, in der Überschlagsposition mit dem Überrollkörper zum Zwecke der Arretierung in Eingriff zu gelangen. Diese Ausgestaltung der Erfindung ermöglicht eine einfache Überführung des Überrollkörpers in die Lagerungsstellung nach der zu Testzwecken erfolgten Aktivierung.

Besonders vorteilhafterweise weist dabei der Steuerungsschieber eine Schrägfläche auf, die in der Entsperrstellung an einem Sperrstift des Aktuators anliegt. Die Schrägfläche ermöglicht es in besonders einfacher Weise, die Steuerungseinheit in die Sperrstellung zurückzubewegen, wobei die Längsverschiebung des Steuerungsschiebers in Richtung der Sperrklinke aufgrund der Schrägfläche unterstützt wird.

Nach einer weiteren Ausgestaltung der Erfindung weist die Steuerungseinheit einen gelenkig mit der Sperrklinke verbundenen Steuerungshebel auf, der in der Sperrstellung einerseits mit dem Aktuator in Eingriff befindlich und andererseits an einem Entriegelungsschieber anliegt. Diese, in der Regel alternativ zur Verwendung eines Steuerungsschiebers vorgesehene Ausgestaltung der Steuerungseinheit zeichnet sich durch ihren besonders einfachen und somit kostengünstigen Aufbau aus.

Die Steuerungseinheit weist einen gelenkig mit der Sperrklinke verbundenen Steuerungshebel auf, der gegenüberliegend dem mit dem Überrollkörper zusammenwirkenden Ende der Sperrklinke mit dieser verbunden ist. Der Sperrhebel liegt dabei vorzugsweise einerseits des Gelenkpunktes mit der Sperrklinke an einem Sperrstift des Aktuators und andererseits an einem Entriegelungsschieber an. Nachdem eine Verschwenkung der Sperrklinke ein Verschwenken des Steuerungshebels voraussetzt, ist hierdurch eine Verschwenkung der Sperrklinke blockiert. Die hierfür erforderliche Verschwenkung des Steuerungshebels setzt ein Außereingriffkommen entweder mit dem Entriegelungsschieber oder mit einem Sperrstift des Aktuators voraus.

Die Verstellung des Entriegelungsschiebers, wodurch eine Verschwenkbarkeit des Steuerungshebels gegenüber dem Sperrstift des Aktuators ermöglicht wird, ermöglicht somit in einfacher Weise eine Testauslösung des Überrollkörpers, nachdem durch die Verschwenkung des Steuerungshebels die Sperrklinke gegenüber dem Aktuator verschwenkbar und damit mit dem Überrollkörper außer Eingriff gelangen kann. Auch eine Rückverlagerung des Überrollkörpers lässt sich in besonders einfacher Weise realisieren, wozu lediglich der Entriegelungsschieber in seine Ausgangsposition zurückbewegt werden muss.

Zwei Ausführungsbeispiele der Erfindung werden nachstehend mit Bezug auf die Zeichnungen näher erläutert. In den Zeichnungen zeigen:
- Fig. 1a: eine perspektivische Ansicht einer ersten Ausführungsform eines Überrollschutzsys- tems in einer Lagerungsposition eines Überrollkörpers;
- Fig. 1b: eine Seitenansicht des Überrollschutzsystems von Fig. 1a;
- Fig. 2a: eine perspektivische Ansicht des Überrollschutzsystems von Fig. 1 in einer aktuato- rindizierten Auslöseposition;
- Fig. 2b: eine perspektivische Ansicht des Überrollschutzsystems von Fig. 1 in einer teilausge-
- Fig. 3: fahrenen Position des Überrollkörpers; eine perspektivische Ansicht des Überrollschutzsystems von Fig. 1 in einer testaus- gelösten Freigabestellung der Sperrklinke;
- Fig. 4: eine Seitenansicht einer zweiten Ausführungsform eines Überrollschutzsystems in einer Lagerungsposition des Überrollkörpers und
- Fig. 5: eine Seitenansicht des Überrollschutzsystems von Fig. 4 in einer testweise ausgelös- ten Position.

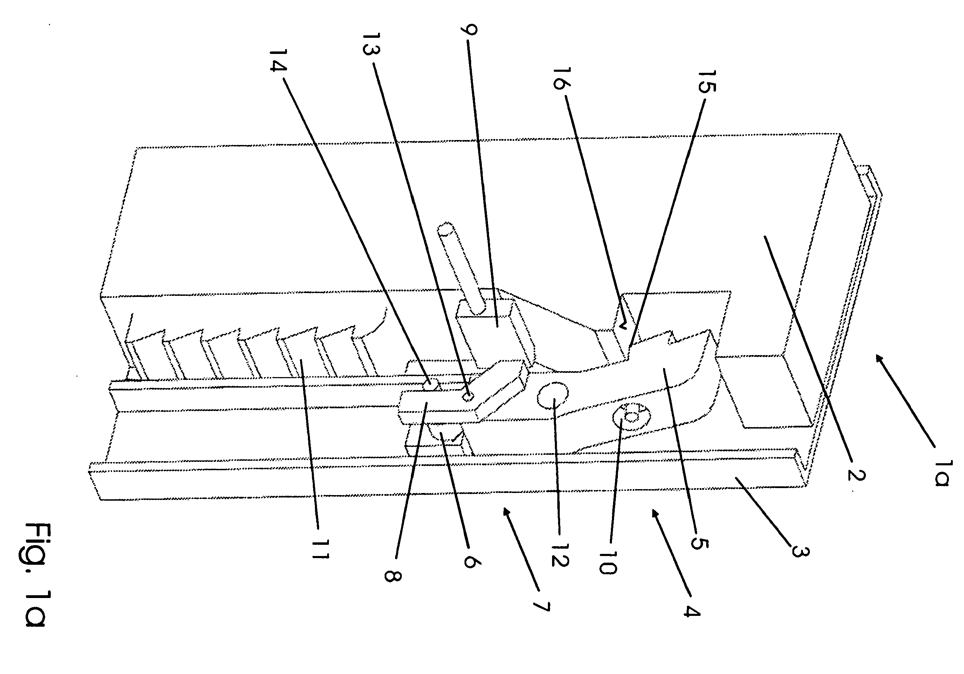

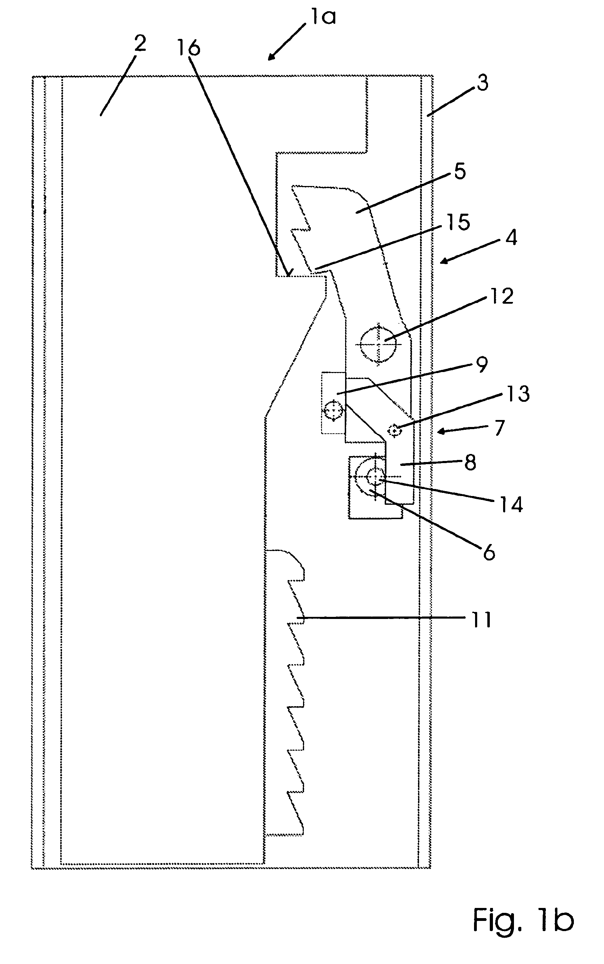

Eine erste Ausführungsform eines Überrollschutzsystems 1a ist in den Figuren 1a und 1b in einer Lagerungsposition eines Überrollkörpers 2 dargestellt. Der Überrollkörper 2 des Überrollschutzsystems 1a ist dabei durch eine Sperrklinke 5 einer Verriegelungseinheit 4 in seiner Position gegenüber einem Gehäuse 3 des Überrollschutzsystems 1a arretiert. Hierzu liegt die Sperrklinke 5 mit einer Rastnase 15 in einer Rastausnehmung 16 des Überrollkörpers 2 an und blockiert damit eine Verstellung des Überrollkörpers 2 gegenüber dem Gehäuse 3.
Eine durch eine hier nicht dargestellte Antriebseinheit indizierte Verstellung setzt eine Verschwenkung der Sperrklinke 5 in eine Freigabestellung voraus, in der die Rastnase 15 mit der Rastausnehmung 16 außer Eingriff gelangt.

In der Lagerungsstellung ist eine Verschwenkung der Sperrklinke 5 um einen Lagerungsbolzen 12 in Folge der durch die Antriebseinheit erzeugten Kraft auch entgegen einer durch ein in einer Vertiefung 10 der Sperrklinke 5 angeordneten Federelement 17, das die Sperrklinke 5 in Richtung auf den Überrollkörper vorspannt, jedoch durch eine Steuerungseinheit 7 blockiert. Die Steuerungseinheit 7 weist hierzu einen Steuerungshebel 8 auf, der seinerseits gelenkig über einen Lagerbolzen 13 mit der Sperrklinke 5 verbunden ist, wobei der Lagerungspunkt des Sperrhebels 8 an einem der Rastnase 15 gegenüberliegenden Ende der Sperrklinke 5 angeordnet ist.

Die Steuerungseinheit 7 blockiert über den Steuerungshebel 8 eine Verschwenkung der Sperrklinke 5 dadurch, dass der Steuerungshebel 8 einerseits des Lagerbolzens 13 an einem Sperrstift 14 eines Aktuators 6 und andererseits an einem Entriegelungsschieber 9 anliegt. Eine Verstellung der Sperrklinke 5 setzt zuvor eine Verschwenkung des Steuerungshebels 8 gegenüber dem Lagerungsbolzen 13 voraus. Hierzu ist es erforderlich, dass der Steuerungshebel 8 entweder mit dem Sperrstift 14 des Aktuators 6 oder mit dem Entriegelungsschieber 9 außer Eingriff gelangt.

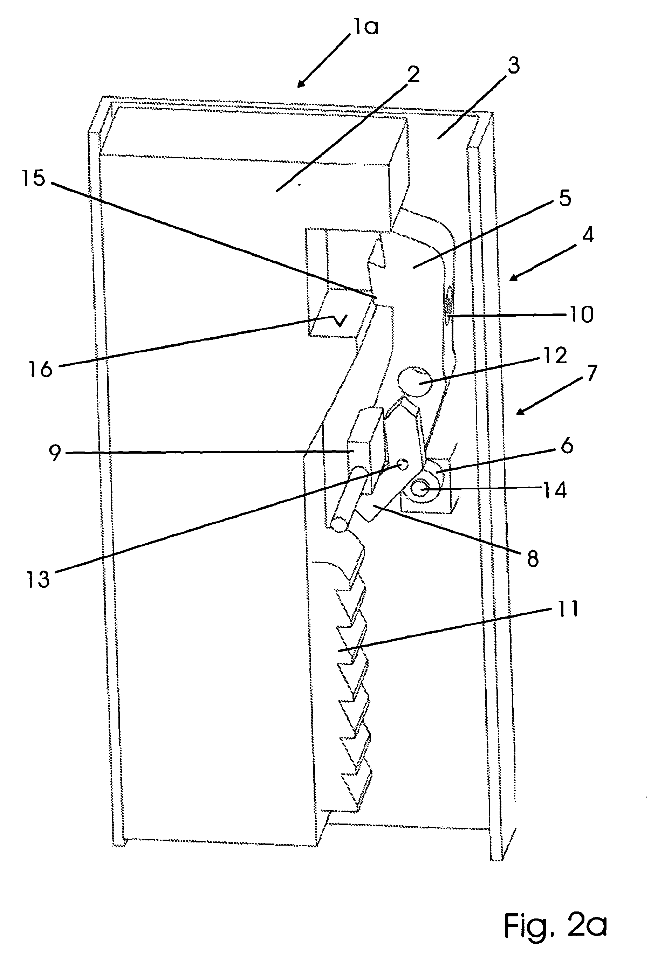

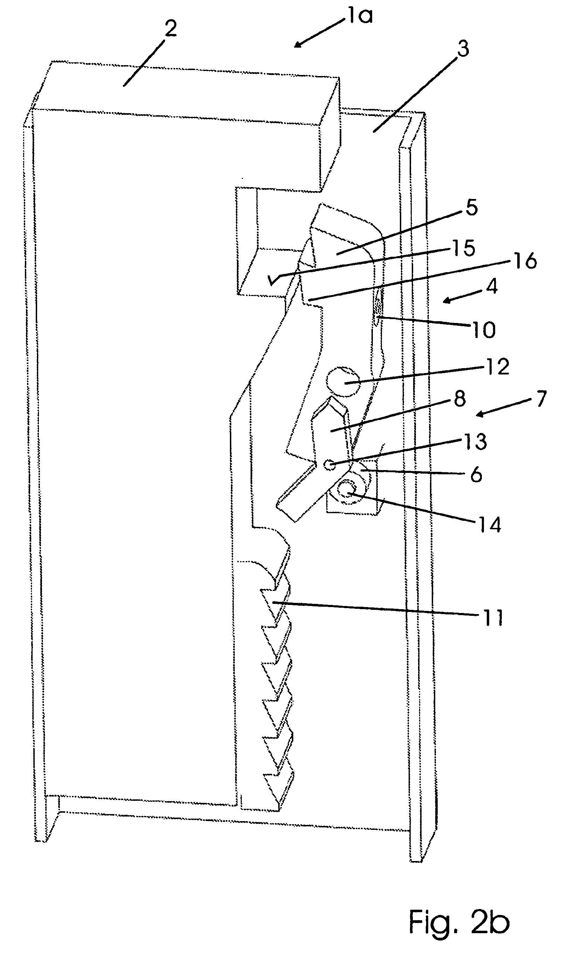

In den in Fig. 2a und 2b dargestellten Positionen des Überrollschutzsystems 1a erfolgte eine Auslösung, d. h. eine Verschwenkung der Sperrklinke 5 aus der Sperrstellung in eine Freigabestellung durch eine Aktivierung des Aktuators 6. Dieser ist im vorliegend dargestellten Ausführungsbeispiel als ziehender Aktuator 6 ausgebildet, d. h. in einem sensorgesteuert detektierten Überschlagsfall erfolgt ein Hineinziehen des Sperrstifts 14 in ein Gehäuse des Aktuators 6, so dass der Sperrhebel 8 mit dem Sperrstift 14 außer Eingriff gelangt. Durch die dann mögliche Verschwenkbarkeit des Sperrhebels 8 wird eine Verschwenkung der Sperrklinke 5 gegenüber dem Lagerungsbolzen 12 ermöglicht. Die Verschwenkung der Sperrklinke 5 erfolgt dabei infolge der durch die Antriebseinheit auf den Überrollkörper 2 wirkenden Kraft, welche über die Rastausnehmung 16 auf die Rastnase 15 der Sperrklinke 5 übertragen wird.

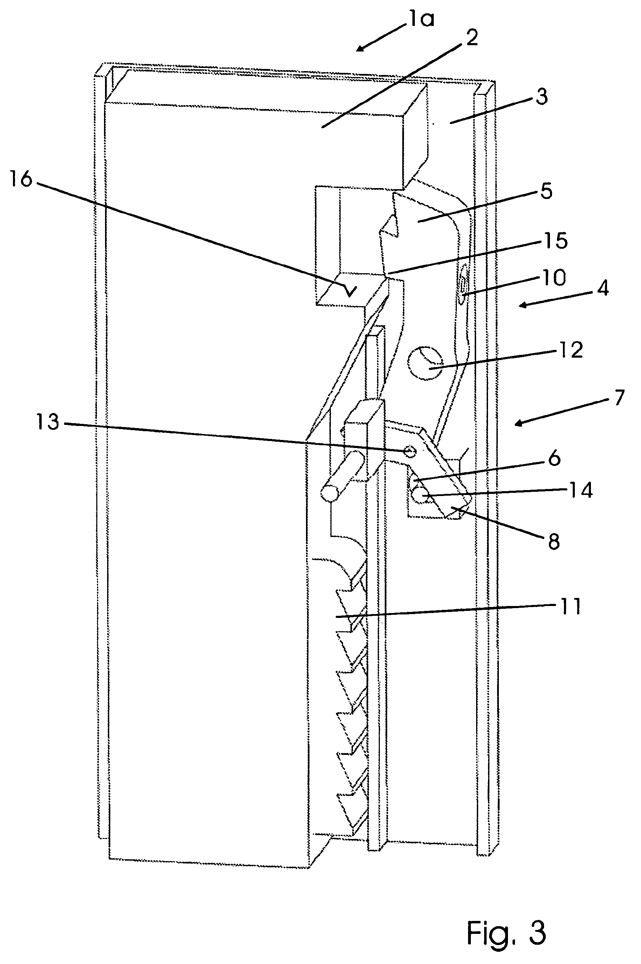

Neben der in den Fig. 2a und 2b dargestellten Auslösung im Falle einer Aktivierung des Aktuators 6 besteht für das Überrollschutzsystem 1a die Möglichkeit einer Testauslösung, wie sie in Fig. 3 dargestellt ist. Hierbei ist der Entriegelungsschieber 9 derart gegenüber dem Sperrhebel 8 verstellt, dass dieser mit diesem außer Eingriff gelangt, so dass der Sperrhebel 8 gegenüber der Sperrklinke 5 verschwenkbar ist, so dass aufgrund der durch die Antriebseinheit erzeugten Vorspannkraft die Sperrklinke 5 mit der Rastausnehmung 16 außer Eingriff gelangt, wodurch eine Testauslösung des Überrollkörpers 2 erreicht wird. Die Testauslösung erfolgt dabei unabhängig von der Position des Sperrstifts 14 des Aktuators 6, welcher in seiner Position verbleiben kann, so dass nach erfolgter Testauslösung dieser nicht ausgetauscht werden muss.

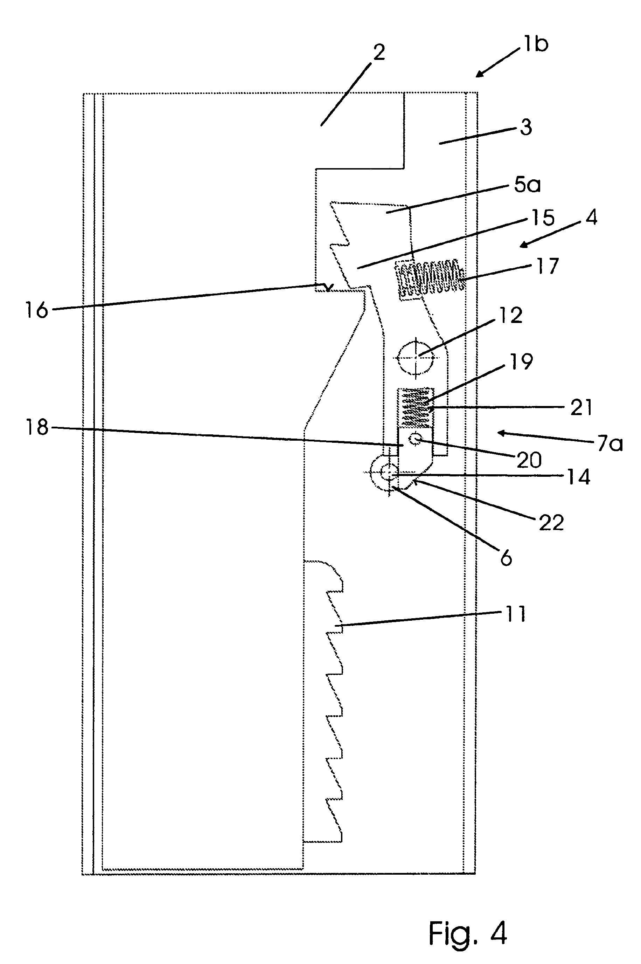

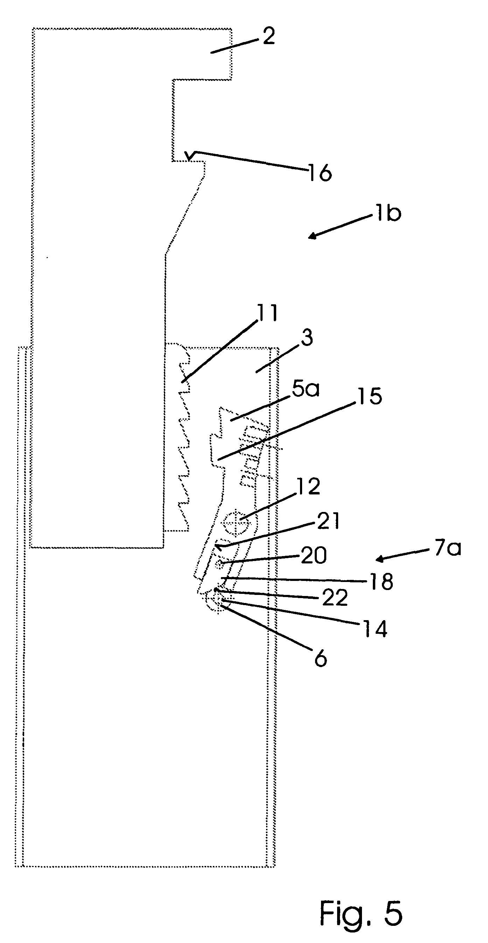

In dem in Fig. 4 und 5 dargestellten zweiten Ausführungsbeispiel des Überrollschutzsystems 1b ist die Steuerungseinheit 7a nicht durch einen verschwenkbaren Steuerungshebel 8, sondern durch einen längsverschiebbar an der Sperrklinke 5a gelagerten Steuerungsschieber 18 gebildet. Zur Testauslösung kann der Steuerungsschieber 18, komfortabel manuell über einen Bedienstift 20, entgegen einer durch eine Schraubendruckfeder 19 erzeugten Federkraft in eine Ausnehmung 21 der Sperrklinke 5a hineinverschoben werden, wodurch der Steuerungsschieber 18 mit dem Sperrstift 14 des Aktuators 6 außer Eingriff gelangt, so dass die Sperrklinke 5a aufgrund der durch die Antriebseinheit indizierten Kraft derart um den Lagerungsbolzen 12 verschwenkt, dass die Rastnase 15 der Sperrklinke 5a mit der Rastausnehmung 16 außer Eingriff gelangt.

In der in Fig. 5 dargestellten Position der Sperrklinke ist deren Position durch die Anlage des Steuerungsschiebers 18 über eine Schrägfläche 22 an dem Sperrstift 14 des Aktuators 6 festgelegt. Dies ermöglicht eine einfache Rückführung des Überrollkörpers 2 in die Lagerungsposition. Zusätzlich vereinfacht die Schrägfläche 22 eine erneute Verstellung des Steuerungsschiebers 18 in die Ausnehmung 21, so dass die Sperrklinke 5a in ihre Lagerungsposition verschwenkt werden kann.

In den beiden in den Figuren 1a - 5 dargestellten Ausführungsbeispielen des Überrollschutzsystems 1 dient die Sperrklinke 5, 5a neben einer Arretierung des Überrollkörpers 2 in der Lagerungsposition zusätzlich zur Festlegung des Überrollkörpers 2 in einer Überschlagsposition. Hierzu sind an dem Überrollkörper 2 eine Mehrzahl von Rastmarken 11 ausgebildet, die in einer Überschlagsposition mit der komplementär ausgebildeten Sperrklinke 15 in Eingriff gelangen, die ein Zurückschieben des Überrollkörpers 2 in das Gehäuse 3 verhindert. Um ein Zusammenwirken der Sperrklinke 5, 5a mit den Rastmarken 11 zu gewährleisten, ist die Sperrklinke durch die Schraubendruckfeder 17 in Richtung auf den Überrollkörper 2 vorgespannt.

## Patentansprüche

1. Überrollschutzsystem für Kraftfahrzeuge, mit
- einem zwischen einer Lagerungsposition und einer Überschlagsposition verstellbaren Überrollkörper,
- einer den Überrollkörper in Richtung auf die Überschlagsposition vorspannenden Antriebseinheit und
- einer zwischen einer den Überrollkörper arretierenden Sperrstellung und einer den Überrollkörper freigebenden Freigabestellung verstellbaren Verriegelungseinheit,
dadurch gekenntzeichnet, dass an der Verriegelungseinheit (4) eine in der Sperrstellung mit einem verstellbaren Aktuator (6) in Eingriff befindliche und hierdurch die Verriegelungseinheit (4) in der sperrstellung festlegende Steuerungseinheit (7) angeordnet ist, wobei die Steuerungseinheit (7) derart ausgebildet ist, dass diese in eine Entsperrposition verstellbar ist, in der die Verriegelungseinheit (4) unabhängig von der Stellung des Aktuators (6) in die Freigabestellung bewegbar ist, wobei die Verriegelungseinheit (4) eine zwischen der Sperrstellung und der Freigabestellung verschwenkbare Sperrklinke (5) aufweist, die in der Sperrstellung einerseits mit dem Überrollkörper (2) und andererseits mit einem Sperrstift (14) des Aktuators (6) in Wirkverbindung befindlich ist.

2. Überrollschutzsystem nach Anspruch 1, dadurch gekenntzeichnet, dass die Sperrklinke (5) in Richtung auf den Überrollkörper (2) vorgespannt und zur Arretierung des Überrollkörpers (2) in einer Überschlagsposition ausgebildet ist.

3. Überrollschutzsystem nach Anspruch 1 oder 2, dadurch gekenntzeichnet, dass die Steuerungseinheit (7) einen in die Entsperrposition längs verschiebbar an der Sperrklinke (5) gelagerten und mit dem Sperrstift (14) des Aktuators (6) in der Sperrstellung in Eingriff befindlichen Steuerungsschieber (18) aufweist.

4. Überrollschutzsystem nach einem der vorhergehenden Ansprüche, **dadurch gekennzeichnet, dass** der Steuerungsschieber (18) in Richtung auf die mit dem Sperrstift (14) in Eingriff befindliche Position vorgespannt ist.

5. Überrollschutzsystem nach einem der vorhergehenden Ansprüche, **dadurch gekennzeichnet; dass** der Steuerungsschieber (18) derart ausgebildet ist, dass dieser die Sperrklinke (5) in der Entriegelungsstellung an dem Sperrstift (14) arretiert.

6. Überrollschutzsystem nach einem der vorhergehenden Ansprüche, **dadurch gekennzeichnet, dass** der steuerungsschieber (18) eine Schrägfläche (22) aufweist, die in der Entsperrstellung an dem Sperrstift (14) des Aktuators (6) anliegt.

7. Überrollschutzsystem nach einem der vorhergehenden Ansprüche, **dadurch gekennzeichnet, dass** die Steuerungseinheit (7) einen gelenkig mit der Sperrklinke (5) verbundenen Steuerungshebel (8) aufweist, der in der Sperrstellung einerseits mit dem Aktuator (6) in Eingriff befindlich ist und andererseits an einem Entriegelungsschieber (9) anliegt.

8. Überrollschutzsystem nach einem der vorhergehenden Ansprüche, **dadurch gekennzeichnet, dass** der Entriegelungsschieber (9) zur verstellung der Steuerungseinheit (7) in die Entsperrposition mit dem Steuerungshebel (8) außer Eingriff bringbar ist.

## Claims

1. A rollover protection system for motor vehicles, with
- a rollover body movable between a storage position and a rollover position,
- a drive unit pretensioning the rollover body in the direction toward the rollover position, and
- a locking unit movable between a blocking position locking the rollover body and a release position releasing the rollover body,
**characterized in that** a control unit (7), in the blocking position engaged with a movable actuator (6), and hereby fixing the locking unit (4) in the blocking position, is disposed on the locking unit (4), wherein the control unit (7) is designed so that it is movable into an unblocking position in which the locking unit (4) can be moved into the release position independently of the position of the actuator (6), wherein the locking unit (4) has a pawl (5) that can pivot between the blocking position and the release position, and that in the blocking position is in operative engagement on the one hand with the rollover body (2) and on the other with a locking pin (14) of the actuator (6).

2. The rollover protection system according to claim 1, **characterized in that** the pawl (5) is pretensioned in the direction of the rollover body (2) and is designed for locking the rollover body (2) in a rollover position.

3. The rollover protection system according to claim 1 or 2, **characterized in that** the control unit (7) has a control slide (18) mounted at the pawl (5) that is movable longitudinally into the unblocking position, and in the blocking position is engaged with the locking pin (14) of the actuator (6).

4. The rollover protection system according to one of the preceding claims, **characterized in that** the control slide (18) is pretensioned in the direction of the position being in engagement with the locking pin (14).

5. The rollover protection system according to one of the preceding claims, **characterized in that** the control slide (18) is designed such that this locks the pawl (5) in the unlocking position on the locking pin (14).

6. The rollover protection system according to one of the preceding claims, **characterized in that** the control slide (18) has an oblique surface (22) that in the unblocking position abuts on the locking pin (14) of the actuator (6).

7. The rollover protection system according to one of the preceding claims, **characterized in that** the control unit (7) has a control lever (8), connected to the pawl (5) in an articulated manner that in the blocking position on the one hand is in engagement with the actuator (6), and on the other hand abuts on an unlocking slide (9).

8. The rollover protection system according to one of the preceding claims, **characterized in that** the unlocking slide (9) can be taken out of engagement with the control lever (8) for moving the control unit (7) into the unblocking position.

## Revendications

1. Système de protection contre les tonneaux pour des véhicules automobiles, comprenant
- un corps de protection contre les tonneaux réglable entre une position de rangement et une position de retournement,
- une unité d'entraînement qui précontraint le corps de protection contre les tonneaux en direction de la position de retournement,
- une unité de verrouillage réglable entre une position d'arrêt bloquant le corps de protection contre les tonneaux et une position de libération libérant le corps de protection contre les tonneaux,
**caractérisé en ce que** sur l'unité de verrouillage (4) est agencée une unité de commande (7) se trouvant en prise dans la position d'arrêt avec un actionneur réglable (6) et fixant ainsi l'unité de verrouillage (4) dans la position d'arrêt, l'unité de commande (7) étant configurée de telle sorte qu'elle est réglable dans une position de déblocage, dans laquelle l'unité de verrouillage (4) est mobile dans la position de libération indépendamment de la position de l'actionneur (6), l'unité de verrouillage (4) comportant un cliquet d'arrêt (5) orientable entre la position d'arrêt et la position de libération, lequel cliquet d'arrêt se trouve en liaison active dans la position d'arrêt d'une part avec le corps de protection contre les tonneaux (2) et d'autre part avec une goupille d'arrêt (14) de l'actionneur (6).

2. Système de protection contre les tonneaux selon la revendication 1, **caractérisé en ce que** le cliquet d'arrêt (5) est précontraint dans la direction du corps de protection contre les tonneaux (2) et conçu pour bloquer le corps de protection contre les tonneaux (2) dans une position de retournement.

3. Système de protection contre les tonneaux selon la revendication 1 ou 2, **caractérisé en ce que** l'unité de commande (7) comprend une coulisse de commande (18) montée longitudinalement coulissante contre le cliquet d'arrêt (5) dans la position de déblocage et se trouvant en prise avec la goupille d'arrêt (14) de l'actionneur (6) dans la position d'arrêt.

4. Système de protection contre les tonneaux selon une des revendications précédentes, **caractérisé en ce que** la coulisse de commande (18) est précontrainte en direction de la position se trouvant en prise avec la goupille d'arrêt (14).

5. Système de protection contre les tonneaux selon une des revendications précédentes, **caractérisé en ce que** la coulisse de commande (18) est configurée de telle sorte que celle-ci bloque le cliquet d'arrêt (5) contre la goupille d'arrêt (14) dans la position de déverrouillage.

6. Système de protection contre les tonneaux selon une des revendications précédentes, **caractérisé en ce que** la coulisse de commande (18) présente une surface biseautée (22) qui s'appuie dans la position de déverrouillage contre la goupille d'arrêt (14) de l'actionneur (6).

7. Système de protection contre les tonneaux selon une des revendications précédentes, **caractérisé en ce que** l'unité de commande (7) comprend un levier de commande (8) relié de façon articulée au cliquet d'arrêt (5), lequel levier se trouve d'une part en prise dans la position d'arrêt avec l'actionneur (6) et s'appuie d'autre part contre une coulisse de déverrouillage (9).

8. Système de protection contre les tonneaux selon une des revendications précédentes, **caractérisé en ce que** la coulisse de déverrouillage (9) peut être désolidarisée du levier de commande (8) dans la position de déblocage pour le réglage de l'unité de commande (7).
